# FASCICULE DE BREVET EUROPEEN

(11) **EP 2 917 551 B1**
(45) Date de publication et mention de la délivrance du brevet: **19.05.2021**
(21) Numéro de dépôt: 13789866.4
(22) Date de dépôt: 21.10.2013
(51) Int. Cl.: F02M 26/70, F16K 27/02, F16K 31/04

(54) **VANNE MOTORISÉE SURMOULÉE A ETANCHÉITÉ AMÉLIORÉE**
MOTORISIERTES VENTIL MIT VERBESSERTER ÜBERGEGOSSER DICHTUNG
MOTORISED VALVE WITH IMPROVED OVERMOLDED SEALING

(30) Priorité: 06.11.2012 FR 1202971
(43) Date de publication de la demande: 16.09.2015
(73) Titulaire: Sonceboz Automative SA, 2605 Sonceboz (CH)
(72) Inventeur: MELLERE, Cédric, F-25190 Soulce Cernay (FR); GANDEL, Pierre, F-25660 Montfaucon (FR)
(74) Mandataire: IP Trust
(86) Numéro de dépôt international: PCT/FR2013/052505
(87) Numéro de publication internationale: WO 2014/072605

(56) Documents cités:
- EP-A2- 1 186 763
- DE-A1-102007 013 937
- DE-A1-102009 057 491
- FR-A1- 2 896 025
- US-A- 3 990 675
- US-A1- 2008 295 800

## Description

### Domaine technique de l'invention

La présente invention concerne le domaine des vannes instrumentées et plus particulièrement les vannes motorisées destinées à permettre la régulation de la circulation de fluides grâce à un clapet obturable commandé par un actionneur de type électromagnétique.

Les moteurs thermiques, pour véhicule automobile notamment, doivent répondre à des normes environnementales en matière de rejet d'émissions polluantes et de consommation de carburant. Les constructeurs/motoristes ont développé et continuent de développer différentes stratégies pour respecter ces obligations. La solution couramment utilisée est de récupérer une partie des gaz d'échappement, directement à la sortie du bloc cylindre, pour les réinjecter en amont de la chambre de combustion en les mélangeant avec de l'air frais. Cette fonction est assurée via une vanne EGR (Exhaust Gas Recirculation), pilotée par un actionneur électromagnétique qui ouvre plus ou moins la vanne pour définir la fraction de gaz brûlé à retourner à l'admission.

Cette vanne, ainsi que l'actionneur qui la pilote, sont fortement sollicités. Comme l'ensemble est directement intégré sur le bloc moteur ou sur des éléments solidaires du bloc moteur (on parle ici d'EGR haute pression), le niveau vibratoire est important et les températures des gaz extrêmement élevées. Par conséquent, la vanne est généralement réalisée en métal (en acier pour la partie directement en contact avec les gaz, en aluminium pour la partie externe) et elle peut être refroidie par un circuit d'eau pour éviter au système de surchauffer et d'être endommagé.

Les normes environnementales devenant toujours plus strictes, une nouvelle solution, en complément de l'EGR HP, est apparue. Il s'agit de l'EGR BP (Basse Pression) qui fonctionne sur le même principe que l'EGR HP mais qui est différemment intégrée. Le captage des gaz d'échappement ayant lieu en aval du filtre à particule, la vanne n'est pas forcément fixée sur le bloc moteur, mais peut se trouver rattachée au système de conduits reliant l'échappement à l'admission. L'ensemble actionneur + vanne est alors moins sollicité mécaniquement mais surtout thermiquement, la température des gaz ayant nettement baissée. Cet environnement plus favorable autorise d'autres solutions techniques et d'autres matériaux que l'acier ou l'aluminium pour réaliser la vanne permettant l'utilisation de plastiques techniques deviennent une très bonne alternative.

### Etat de la technique antérieur

La solution actuelle pour vanne EGR BP est un « simple assemblage » d'un moteur couple sur une vanne produite par un équipementier automobile. La vanne ne comporte plus d'acier, elle est intégralement réalisée en aluminium et elle n'est plus refroidie.

Le design de l'ensemble vanne + actionneur est compact. Le clapet de la vanne est guidé par une liaison pivot du côté actionneur, il est libre à son autre extrémité. Cette solution offre une bonne maîtrise des débits de fuite (position fermée) et est compacte.

Cette vanne est « failsafe » : un élément de rappel élastique, intégré entre la partie mobile de l'actionneur (axe) et le corps de la vanne a pour fonction de ramener le clapet en position fermée dès lors que l'actionneur ne reçoit plus de courant ou en cas de défaillance. Il permet également de plaquer le clapet sur son siège et d'assurer un niveau d'étanchéité minimum de la vanne sans courant dans l'actionneur Le moyen de rappel élastique est un ressort de torsion qui présente les inconvénients d'introduire du frottement, d'être encombrant et de présenter des difficultés d'assemblage.

Enfin, il faut gérer l'étanchéité entre le conduit de la vanne et l'actionneur. Pour éviter au gaz d'échappement de remonter le long de l'axe de l'actionneur et risquer de l'endommager, un joint dynamique simple lèvre est intégré. Il est pris en sandwich entre le corps de vanne et le palier de guidage rapporté. Un joint statique O-ring est également utilisé entre le stator de l'actionneur et la vanne pour éviter que des agents extérieurs ne pénètrent et corrodent l'ensemble.

On connaît dans l'art antérieur la demande de brevet US2008/0295800 décrivant un corps de vanne papillon fabriquée en un matériau composite de haute performance qui est surmoulé avec un nylon pour former l'enveloppe extérieure du corps de papillon.

Le brevet allemand DE102007013937 décrit une vanne présentant une pièce en matière plastique moulée par injection, qui reçoit les dispositifs d'appui, par exemple des roulements à aiguilles.

Les dispositifs d'appui sont supportés indépendamment les uns des autres dans la pièce en matière plastique moulée par injection, et comportent une bague extérieure formée avec des brides de support individuel.

Les dispositifs sont agencés pour supporter un arbre de clapet d'étranglement.

Ce document propose une solution de double étanchéité dynamique sur l'axe portant le clapet. L'axe n'est pas monobloc avec l'axe moteur, l'entraînement étant réalisé par un réducteur.

En résumé, la solution de l'état de l'art répond aux besoins actuels mais elle présente plusieurs éléments pouvant être améliorés :
Suivant les températures de fonctionnement, l'aluminium n'est pas obligatoire pour l'intégralité du corps de vanne.

La fonction de retour en position en cas de défaillance (« failsafe ») est encombrante, avec contact et contraignante à gérer en production.

La fonction étanchéité est contraignante car elle nécessite une double étanchéité.

Il faut gérer l'assemblage d'un actionneur sur une vanne, le tout n'étant pas optimisé en encombrement.

On connait par ailleurs des solutions telles que décrites dans le brevet EP1030041 (Dana) qui présente une solution permettant de réduire masse et coût de l'actionneur et facilite l'installation de l'actionneur dans la vanne.

Cependant, cette solution nécessite une opération de mise en place de l'actionneur dans le corps prolongé de la vanne et nécessite ainsi un montage soigné qui doit prendre en compte l'étanchéité de la vanne vis-à-vis de l'actionneur par l'utilisation de plusieurs joints assurant les fonctions d'étanchéité statique (c'est-à-dire l'étanchéité entre deux ensembles de nature différentes qui ne bougent pas l'un par rapport à l'autre) et dynamique (c'est-à-dire l'étanchéité entre deux ensembles de nature différentes qui se déplacent l'un par rapport à l'autre). De plus, cette solution ne permet pas d'assurer une bonne dissipation thermique de l'actionneur du fait que l'actionneur n'est pas entièrement solidaire et entouré par le fourreau dans lequel il est installé.

Le brevet FR2896025 apporte certaines améliorations et permet notamment, à travers l'utilisation d'un surmoulage global de l'actionneur et de la vanne, d'assurer un couplage optimisant la dissipation thermique de l'actionneur tout en améliorant l'assemblage et en réduisant le porte-à-faux dans l'actionneur.

Cependant, ce brevet ne résout pas le problème d'étanchéité rencontré car il utilise un palier mais n'empêche pas le fluide de remonter par l'axe de l'actionneur qui peut venir polluer ce dernier et limiter sa durée de vie. En effet ce document de l'art antérieur est destiné à permettre l'obturation de conduit d'air à basse température et propre et le passage de gaz dans l'actionneur n'est ainsi pas problématique.

### Exposé de l'invention

La présente invention a pour but de remédier aux problèmes d'étanchéité rencontré par les solutions de l'art antérieur en conférant, en plus des avantages de compacité, robustesse et légèreté amenés par l'utilisation d'un surmoulage englobant actionneur et tubulure, une totale étanchéité de la vanne en utilisant qu'un seul joint.

Pour résoudre les inconvénients précédents, et assurer la fonction d'étanchéité, la solution prise ici est de se servir du surmoulage plastique (typiquement réalisé en matériau polymère cristallisé liquide - LCP) pour assurer la fonction d'étanchéité statique. Il n'y a alors plus besoin que d'un seul joint dynamique contrairement aux solutions de l'art antérieur.

Un des objets de l'invention est aussi de ne conserver que le nécessaire et de surmouler l'ensemble vanne (tubulure) et actionneur en une seule fois, avec un seul et même outil. On ne conserve alors que la partie magnétique de l'actionneur (circuit fer, bobinage, connectique) et les parties aluminium indispensables du corps de vanne (sièges de fermeture pour l'étanchéité, support de l'actionneur), tout le reste sera effectué en plastique lors de l'opération de surmoulage.

On obtient ainsi un ensemble vanne + actionneur monobloc, compact et plus léger que l'actuel.

Un des objets de l'invention est aussi de proposer le remplacement de l'organe de rappel élastique du clapet par l'utilisation d'un organe de rappel magnétique sans contact tel que décrit dans le brevet FR2744559, conférant des avantages de compacité et de durée de vie supérieurs.

Plus particulièrement, l'invention propose une vanne motorisée composée d'une tubulure obturable, d'un clapet, d'un actionneur électromagnétique rotatif et d'une matière surmoulante plastique, ledit actionneur étant formé d'un ensemble statorique, d'un rotor solidaire d'un axe, le clapet étant positionné progressivement par ledit actionneur par l'intermédiaire de l'axe et apte à obturer la tubulure, la matière surmoulante plastique entourant et étant solidaire au moins en partie de l'actionneur et formant au moins en partie la tubulure, l'étanchéité statique étant réalisé par la matière surmoulante plastique commune entre l'actionneur et la tubulure , ladite matière surmoulante étant traversée par un passage pour le guidage de l'axe reliant le clapet et le rotor, l'axe de l'actionneur portant le clapet.

De préférence, ledit passage traversant la matière surmoulante coopère avec ledit axe par l'intermédiaire d'un moyen d'étanchéité.

A titre d'alternative non limitative, le passage surmoulé est étanchéifié par un joint à lèvre porté par l'axe, en-dessous de la partie surmoulée.

Selon l'invention, l'étanchéité dynamique est réalisée par l'utilisation d'un seul joint en contact avec l'axe.

Préférentiellement, la vanne motorisée comprend un moyen de rappel en position du clapet réalisé par un couplage magnétique, permettant de conférer les qualités d'un système sans contact (sans usure) et d'un volume bien inférieur à ce que l'on peut faire avec des systèmes mécaniques (ressort).

Dans une version particulière, la matière surmoulante plastique forme entièrement la tubulure, notamment dans les cas où les températures de travail le permettent.

Dans un mode de réalisation particulier, la tubulure comprend au moins en partie une base en métal et une partie en matière surmoulante plastique.

Dans ce cas, l'ensemble statorique peut être fixé à la base en métal de la tubulure par des éléments filetés favorisant l'indexation angulaire de l'ensemble statorique par rapport à l'axe de la tubulure. L'axe de l'actionneur peut alors être est positionné par rapport à la base en métal de la tubulure à l'aide d'un nez de centrage rapporté sur la tubulure.

Dans un autre mode de réalisation, l'ensemble statorique est fixé à la base en métal de la tubulure par un nez de centrage rapporté.

Dans un mode de réalisation particulier le nez de centrage rapporté et une partie de la base en métal de la tubulure définissent un logement dans lequel est placé le seul joint.

Dans un autre mode de réalisation l'axe de l'actionneur est positionné par rapport à la tubulure métal à l'aide d'un nez de centrage intégral à la base en métal de la tubulure, c'est-à-dire que la base en métal est prolongée par un nez de centrage.

Dans ce mode de réalisation, l'ensemble statorique est fixé à la base en métal de la tubulure par le nez de centrage intégral à la base en métal de la tubulure.

Dans un mode de réalisation particulier, le seul joint est placé sur l'axe de l'actionneur en contact extérieur statique avec la matière surmoulante plastique et en contact intérieur glissant avec l'axe de l'actionneur.

Dans un autre mode de réalisation le seul joint est positionné sur l'axe de l'actionneur grâce à une gorge réalisée sur l'axe.

Dans un mode de réalisation particulier, la vanne motorisée comprend un couvercle supportant un élément de détection de position du rotor rapporté sur la matière surmoulante plastique et fixé par soudage laser.

Dans un autre mode de réalisation le couvercle présente un ensemble de connexion électrique pour l'alimentation de l'actionneur et de l'élément de détection.

Dans un mode de réalisation particulier, le guidage de l'axe est réalisé uniquement au niveau de l'ensemble statorique.

### Brève description des figures

D'autres caractéristiques et avantages de l'invention ressortiront à la lecture qui suit d'exemples de réalisation détaillés, en référence aux figures annexées qui représentent respectivement :
- la figure 1, une vue de trois-quarts d'une vanne motorisée suivant une réalisation de l'art antérieur,
- la figure 2, une vue de trois quart d'une vanne motorisée selon l'invention,
- la figure 3, une vue isolée du rotor d'un actionneur pouvant être utilisé dans la présente invention,
- la figure 4, une vue isolée d'un actionneur pouvant être utilisé dans la présente invention,
- les figure 5a et 5b, des vues de coupe, respectivement avant et après surmoulage, d'une vanne motorisée selon un premier mode de réalisation,
- les figure 6a et 6b, des vues de coupe, respectivement avant et après surmoulage, d'une vanne motorisée selon un deuxième mode de réalisation,
- les figure 7a et 7b, des vues de coupe, respectivement avant et après surmoulage, d'une vanne motorisée selon un troisième mode de réalisation,
- les figure 8a et 8b, des vues de coupe, respectivement avant et après surmoulage, d'une vanne motorisée selon un quatrième mode de réalisation,
- les figure 9a et 9b, des vues de coupe, respectivement avant et après surmoulage, d'une vanne motorisée selon un cinquième mode de réalisation.

### Description des modes de réalisation

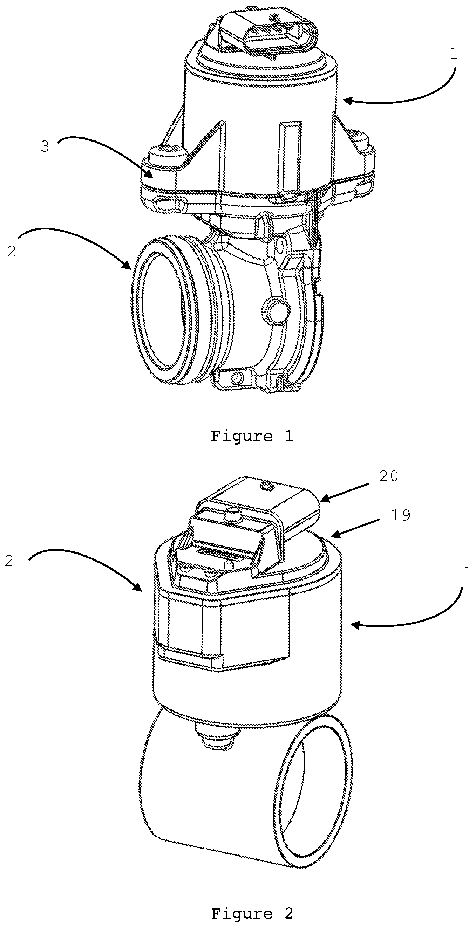

La figure 1 présente une vanne motorisée selon une réalisation de l'art antérieur. Dans cette réalisation classique, ce module est l'association simple d'une tubulure (2) sur laquelle on vient fixer un actionneur (1). Cet assemblage, s'il est viable et utilisé largement présente des inconvénients de volume importants, dû aux points de fixation (3) nécessaire de l'actionneur (1), et de masse importante dû au fait que la tubulure (2) est tout en aluminium, et de comportement thermiques différents entre tubulure (2) et actionneur (1).

La figure 2 présente une vanne motorisée selon l'invention où l'on retrouve la tubulure (2), au moins partiellement surmoulée, ainsi que l'actionneur (1), lui aussi surmoulé. Un des objets de l'invention est de rendre cet ensemble bien plus compact que celui présenté en figure 1 du fait de l'absence de fixations externes et plus léger du fait de la réalisation, au moins en partie, de la tubulure par le surmoulage. De manière préférentielle, l'actionneur (1) et la tubulure (2) de la vanne sont englobés au moins partiellement par le surmoulage (constitué d'une matière plastique) mais l'actionneur (1) présente sur sa partie supérieure un couvercle (19) qui contient des éléments de détection qui, en coopération avec le rotor (5) de l'actionneur (1) permettent de déterminer la position du rotor (5) par rapport à l'ensemble surmoulé. Ce couvercle (19) présente par ailleurs un ensemble de connexions électriques (20) destinées à permettre l'alimentation électrique de l'actionneur (1) et de l'élément de détection.

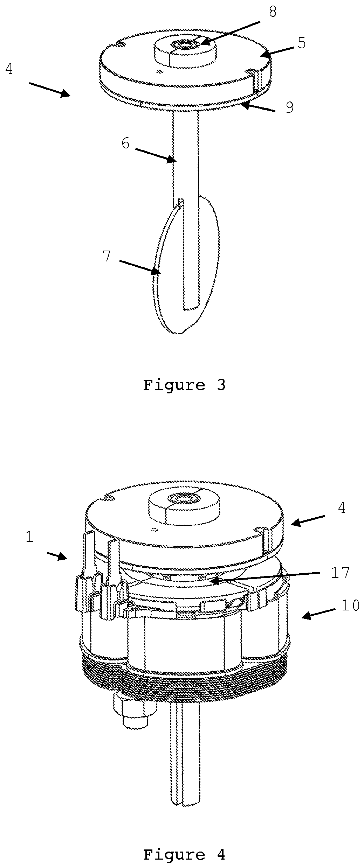

La figure 3 présente une vue isolée d'un rotor (4) pouvant être utilisé dans un actionneur électromagnétique commandant la vanne formée.

Ce rotor (4) est constitué d'une culasse ferromagnétique (5) portant des aimants moteurs (9) sur une première face, destinés à collaborer avec le champ magnétique d'un premier ensemble statorique (non montré) afin de se déplacer par rapport à ce premier ensemble statorique et un aimant capteur (8) sur une deuxième face destinés à collaborer avec un deuxième ensemble statorique (non montré) afin de donner une information de position angulaire du rotor (4) par rapport au premier ensemble statorique.

La culasse (5) aimantée est solidaire d'un axe (6) fendu sur sa partie inférieure afin d'accueillir un clapet (7) obtenu typiquement par emboutissage ou par découpage fin.

La figure 4 montre l'actionneur (1) formé par le rotor (4) et l'ensemble statorique (10) portant des pôles ferromagnétique bobinés. La valeur et fluctuation du courant électrique dans cet ensemble statorique (10) permet donc de déplacer le rotor (4) relativement à ensemble statorique (10).

Cet exemple de réalisation est donné à titre d'exemple préféré pour ce qui est de la fonction d'actionneur utilisée mais n'est nullement limitatif.

De manière préférentielle cet actionneur (1) présente un moyen de rappel en position du rotor (5) de nature magnétique sans contact. Pour ce faire, l'actionneur (1) peut présenter une piste aimantée (17) solidaire de l'ensemble statorique (10) pour interagir avec la culasse (5) aimantée pour ramener le rotor en une position prédéterminée lorsque l'ensemble statorique (10) n'est plus alimenté en courant.

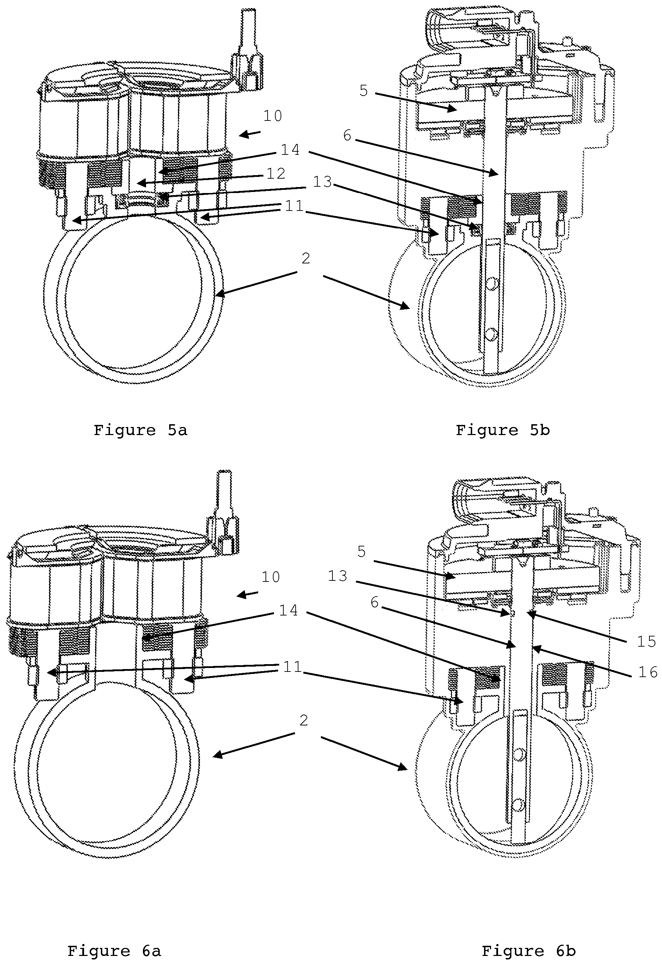

Les figures 5a et 5b montrent un premier mode de réalisation de la vanne motorisée selon l'invention où l'actionneur (1) présenté précédemment est accouplé à une base en métal, de préférence en aluminium, de la tubulure (2). Cet accouplement est réalisé par l'utilisation de 2 éléments filetés (11) de type goujons, fixant l'ensemble statorique (10) à la tubulure (2).

On utilise une bague de glissement (12) rapportée et montée serrée sur la tubulure (2) en aluminium. Cette bague (12) permet de bloquer un joint à lèvre (13): elle protège et évite ainsi au joint (13) d'être détérioré par le plastique lors du surmoulage ; elle offre également un nez de centrage (14) à l'ensemble statorique (10) par un ajustement glissant. Enfin, elle apporte un bon coefficient de frottement avec l'axe (6) du rotor (5) pour garantir une friction faible et éviter une usure prématurée de l'ensemble en mouvement.

Le surmoulage de l'actionneur (1) englobe alors aussi la tubulure (2) pour former un ensemble unitaire, compact et léger.

Dans ce mode de réalisation, le rotor (5) de l'actionneur (1) est guidé par la bague (12) via la surface cylindrique intérieure du nez de centrage (14).

L'étanchéité statique est ainsi réalisée par le surmoulage englobant actionneur et tubulure empêchant tout fluide de venir pénétrer l'actionneur par l'ensemble statorique (10) et l'étanchéité dynamique est réalisée par le seul joint (13) à lèvre qui vient empêcher toute remontée de fluide par l'axe (6) de l'actionneur (1).

Dans tous les modes de réalisation, l'axe (6) de l'actionneur (1) portant le clapet (7) n'est guidé que sur sa partie supérieure -au-dessus du clapet (7)- et n'est pas guidé sur la partie en-dessous du clapet (7), ce qui évite un hyperstatisme.

Les figures 6a et 6b montrent un deuxième mode de réalisation de la vanne motorisée selon l'invention où l'actionneur (1) présenté précédemment est accouplé à une base en métal, de préférence en aluminium, de la tubulure (2). Cet accouplement est réalisé par l'utilisation de 2 goujons (11) fixant l'ensemble statorique (10) à la tubulure (2).

Un nez (14) en aluminium, monobloc et partie intégrante de la tubulure (2), permet le centrage de l'ensemble statorique (10) sur la tubulure (2). Pour éviter tout contact entre l'axe mobile (6) -typiquement en acier inox- et le nez de centrage (14) de la tubulure (2) - typiquement en aluminium-, le surmoulage permet de réaliser l'intégralité du palier (16) guidant le rotor (4) en plastique sur presque toute la hauteur de l'axe (6).

L'étanchéité est alors directement réalisée entre l'axe (6) et le palier (16) plastique au moyen d'un joint (13) ici de type O-ring. Une gorge (15) dont les dimensions correspondent à la section du joint (13) est réalisée sur l'axe. Le joint (13) torique y est alors inséré. Il est en contact statique sur son diamètre extérieur -palier plastique- et en contact dynamique sur son diamètre intérieur avec l'axe (6) en inox. Ainsi, le contact dynamique est sur le plus petit diamètre : la vitesse de glissement est plus faible, le frottement plus faible sur l'inox et l'usure est ainsi réduite. C'est une utilisation peu conventionnelle d'un joint statique en application dynamique mais des tests de durée de vie effectués sur des actionneurs placés en étuve climatique (cycle thermique -40°C / +150°C) montrent une absence de fuite après 10⁶ cycles sous 2 bars de pression relative.

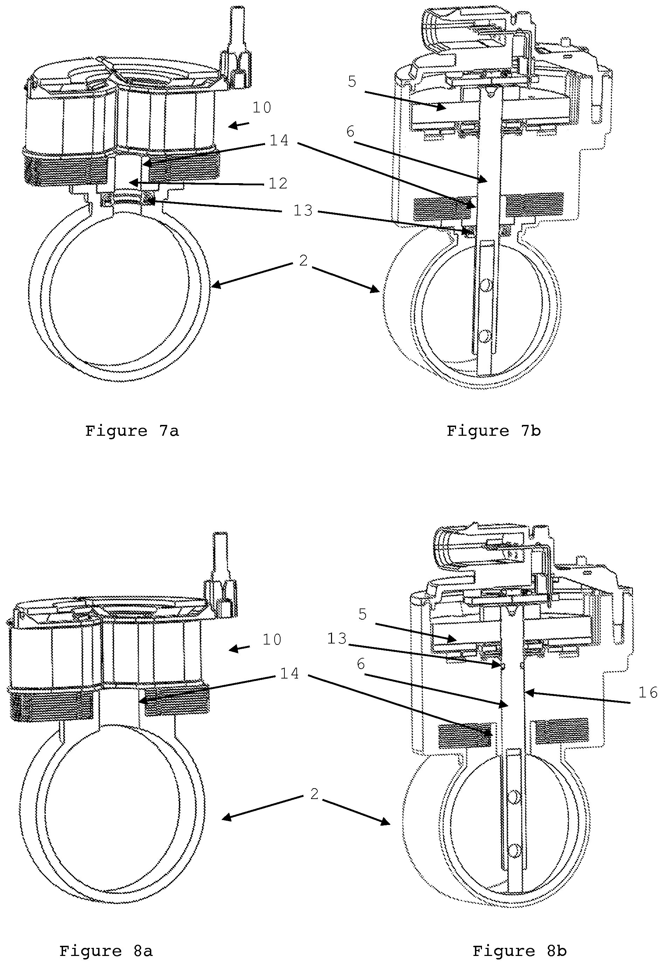

Les figures 7a et 7b montrent un troisième mode de réalisation de la vanne motorisée selon l'invention où on utilise une bague de glissement (12) rapportée et chassée sur la tubulure (2) en aluminium. En plus des fonctions présentées dans le premier mode de réalisation (maintien et protection du joint (13) à lèvre, centrage de l'ensemble statorique (10), guidage et glissement de l'axe (6) du rotor (5)), cet élément permet ici de fixer l'ensemble statorique (10) sur la tubulure (2) par un ajustement serré avec la base de l'ensemble statorique (10).

Cette solution est pertinente car elle permet d'éviter les éléments filetés (coûteux, gestion difficile en production grande série) et le surmoulage plastique offre également une bonne tenue mécanique de l'ensemble (des nervures, formes spécifiques peuvent être apportées au surmoulage pour rigidifier si nécessaire l'ensemble).

L'étanchéité est la même que celle présentée pour le premier mode de réalisation.

Les figures 8a et 8b montrent un quatrième mode de réalisation de la vanne motorisée selon l'invention reprenant une association des deuxième et troisième modes de réalisation. On laisse de côté les éléments filetés au profit d'un centrage ajusté serré et directement effectué entre la base de l'ensemble statorique (10) et la tubulure (2) en aluminium par l'intermédiaire d'un nez de centrage (14) monobloc. Le guidage de l'axe (6) dans la tubulure (2) est intégralement réalisé en plastique au moment du surmoulage.

Dans les réalisations présentées le guidage est réalisé uniquement au niveau de l'ensemble statorique (réalisation préférentielle) mais il peut tout à fait être envisagé d'utiliser en complément un palier ou roulement supplémentaire au niveau de la partie inférieure de la tubulure, guidant l'axe sur son extrémité inférieure.

L'étanchéité est la même que pour le deuxième mode de réalisation. Un joint torique (13) est intégré entre l'ensemble statorique (10) plastique et l'axe inox (6) grâce à l'utilisation d'une gorge (15) formée sur l'axe (6).

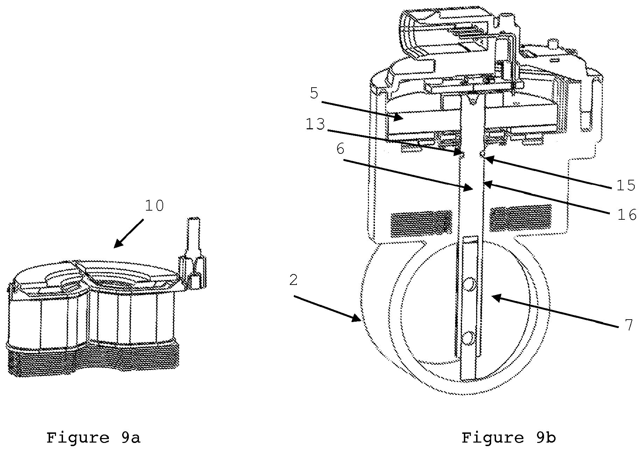

Les figures 9a et 9b montrent un cinquième mode de réalisation de la vanne motorisée selon l'invention où la tubulure (2) est entièrement réalisée en matière plastique surmoulée. Pour certaines applications spécifiques où les sollicitations mécaniques et les contraintes de fuite sont moins sévères, on peut en effet se passer de la partie aluminium de la tubulure (2). On peut alors réaliser intégralement la vanne en matière plastique lors de l'opération de surmoulage.

Il n'y a plus à gérer l'assemblage du corps aluminium de la tubulure (2) avec l'ensemble statorique (10) et l'opération de surmoulage est grandement simplifiée. Bien entendu, des moyens spécifiques pour rigidifier et fixer l'ensemble à son environnement sont à prévoir sur le surmoulage.

Pour cette solution, on ne peut plus avoir recours à un joint dynamique à lèvre : il serait complètement noyé ou détérioré par le plastique. On pourrait envisager de l'insérer après surmoulage mais on n'aurait plus de maintien de cet élément avec un risque non négligeable de le voir tomber dans le conduit des gaz. La solution retenue est donc d'utiliser un joint (13) de type O-ring entre l'axe (6) et le palier (16) plastique formé au niveau de l'axe (6) par le surmoulage.

## Revendications

1. Vanne motorisée composée d'une tubulure obturable (2), d'un clapet (7), d'un actionneur électromagnétique (1) rotatif et d'une matière surmoulante plastique, ledit actionneur (1) étant formé d'un ensemble statorique (10), d'un rotor (5) solidaire d'un axe (6), le clapet (7) étant positionné progressivement par ledit actionneur (1) par l'intermédiaire de l'axe (6) et apte à obturer la tubulure (2), la matière surmoulante plastique entourant et étant solidaire au moins en partie de l'actionneur (1) et formant au moins en partie la tubulure (2), l'étanchéité statique étant réalisé par la matière surmoulante plastique commune entre l'actionneur (1) et la tubulure (2), ladite matière surmoulante étant traversée par un passage pour le guidage de l'axe (6) reliant le clapet (7) et le rotor (5), l'axe (6) de l'actionneur portant le clapet (7), **caractérisée en ce que** l'étanchéité dynamique dudit passage est réalisée par l'utilisation d'un seul joint (13) en contact avec l'axe (6).

2. Vanne motorisée suivant la revendication 1 **caractérisée en ce qu'**elle comprend un moyen de rappel en position du clapet réalisé par un couplage magnétique.

3. Vanne motorisée suivant la revendication 1 ou 2 **caractérisée en ce que** la matière surmoulante plastique forme entièrement la tubulure (2).

4. Vanne motorisée suivant la revendication 1 ou 2 **caractérisée en ce que** la tubulure (2) comprend au moins en partie une base en métal et une partie en matière surmoulante plastique.

5. Vanne motorisée suivant la revendication précédente **caractérisée en ce que** l'ensemble statorique (10) est fixé à la base en métal de la tubulure (2) par des éléments filetés (11) favorisant l'indexation angulaire de l'ensemble statorique (10) par rapport à l'axe (6) de la tubulure (2).

6. Vanne motorisée suivant la revendication précédente **caractérisée en ce que** l'axe (6) de l'actionneur est positionné par rapport à la tubulure (2) métal à l'aide d'un nez de centrage (14) rapporté sur la tubulure (2).

7. Vanne motorisée suivant la revendication 4 **caractérisée en ce que** l'ensemble statorique (10) est fixé à la base en métal de la tubulure (2) par un nez de centrage (14) rapporté.

8. Vanne motorisée suivant la revendication 6 ou 7 **caractérisée en ce que** le nez de centrage (14) rapporté et une partie de la base en métal de la tubulure (2) définissent un logement dans lequel est placé le seul joint (13).

9. Vanne motorisée suivant la revendication 4 **caractérisée en ce que** l'axe (2) de l'actionneur (1) est positionné par rapport à la tubulure (2) métal à l'aide d'un nez de centrage (14) intégral à la base en métal de la tubulure (2).

10. Vanne motorisée suivant la revendication 9 **caractérisée en ce que** l'ensemble statorique (10) est fixé à la base en métal de la tubulure (2) par le nez de centrage (14) intégral à la base en métal de la tubulure (2).

11. Vanne motorisée suivant la revendication 3, 9 ou 10 **caractérisée en ce que** le seul joint (13) est placé sur l'axe (6) de l'actionneur (1) en contact extérieur statique avec la matière surmoulante plastique et en contact intérieur glissant avec l'axe (6) de l'actionneur (1).

12. Vanne motorisée suivant la revendication précédente **caractérisée en ce que** le seul joint (13) est positionné sur l'axe (6) de l'actionneur (1) grâce à une gorge (15) réalisée sur l'axe (6).

13. Vanne motorisée suivant l'une des revendications précédentes **caractérisée en ce qu'**elle comprend un couvercle (19) supportant un élément de détection de position du rotor (5) rapporté sur la matière surmoulante plastique et fixé par soudage laser.

14. Vanne motorisée suivant la revendication précédente **caractérisée en ce que** le couvercle (19) présente un ensemble de connexion électrique pour l'alimentation de l'actionneur (1) et de l'élément de détection.

15. Vanne motorisée suivant l'une au moins des revendications précédentes **caractérisée en ce que** le guidage de l'axe (6) est réalisé uniquement au niveau de l'ensemble statorique (10).

## Patentansprüche

1. Motorisiertes Ventil, bestehend aus einem verschließbaren Rohr (2), einer Klappe (7), einem rotierenden elektromagnetischen Aktuator (1) und einem Kunststoff-Überzugmaterial, wobei der Aktuator (1) aus einer Statoranordnung (10), einem fest mit einer Welle (6) verbundenen Rotor (5) gebildet ist, wobei die Klappe (7) durch den Aktuator (1) über die Welle (6) schrittweise verstellt wird und das Rohr (2) verschließen kann, wobei das Kunststoff-Überzugmaterial den Aktuator (1) umschließt und mindestens teilweise fest mit ihm verbunden ist und mindestens teilweise das Rohr (2) bildet, wobei die statische Abdichtung durch das sowohl den Aktuator (1) als auch das Rohr (2) bildende Kunststoff-Überzugmaterial erreicht wird, wobei durch das Überzugmaterial ein Durchgang zur Führung der Welle (6) verläuft, die die Klappe (7) und den Rotor (5) verbindet, wobei die Welle (6) des Aktuators die Klappe (7) trägt, **dadurch gekennzeichnet, dass** die dynamische Abdichtung des Durchgangs durch die Verwendung einer mit der Welle (6) in Kontakt stehenden, einzigen Dichtung (13) erreicht wird.

2. Motorisiertes Ventil nach Anspruch 1, **dadurch gekennzeichnet, dass** es ein Mittel zur Rückführung der Klappe in Position durch eine Magnetkupplung aufweist.

3. Motorisiertes Ventil nach Anspruch 1 oder 2, **dadurch gekennzeichnet, dass** das Rohr (2) vollständig aus dem Kunststoff-Überzugmaterial gebildet ist.

4. Motorisiertes Ventil nach Anspruch 1 oder 2, **dadurch gekennzeichnet, dass** das Rohr (2) mindestens teilweise einen Metallboden und einen Teil aus Kunststoff-Überzugmaterial aufweist.

5. Motorisierte Ventil nach dem vorhergehenden Anspruch, **dadurch gekennzeichnet, dass** die Statoranordnung (10) durch Gewindeelemente (11) am Metallboden des Rohrs (2) befestigt ist, wodurch die Winkelindexierung der Statoranordnung (10) zur Welle (6) des Rohrs (2) begünstigt wird.

6. Motorisiertes Ventil nach dem vorhergehenden Anspruch, **dadurch gekennzeichnet, dass** die Welle (6) des Aktuators zum Metallrohr (2) mittels einer am Rohr (2) angefügten Zentriernase (14) positioniert wird.

7. Motorisiertes Ventil nach Anspruch 4, **dadurch gekennzeichnet, dass** die Statoranordnung (10) durch eine angefügte Zentriernase (14) am Metallboden des Rohrs (2) befestigt ist.

8. Motorisiertes Ventil nach Anspruch 6 oder 7, **dadurch gekennzeichnet, dass** die angefügte Zentriernase (14) und ein Teil des Metallbodens des Rohrs (2) eine Aufnahme definieren, in der die einzige Dichtung (13) angeordnet ist.

9. Motorisiertes Ventil nach Anspruch 4, **dadurch gekennzeichnet, dass** die Welle (2) des Aktuators (1) zum Metallrohr (2) mittels einer Zentriernase (14) positioniert ist, die mit dem Metallboden des Rohrs (2) einstückig ausgebildet ist.

10. Motorisiertes Ventil nach Anspruch 9, **dadurch gekennzeichnet, dass** die Statoranordnung (10) durch die einstückig mit dem Metallboden des Rohrs (2) ausgebildete Zentriernase (14) am Metallboden des Rohrs (2) befestigt ist.

11. Motorisiertes Ventil nach Anspruch 3, 9 oder 10, **dadurch gekennzeichnet, dass** die einzige Dichtung (13) auf der Welle (6) des Aktuators (1) außen in statischem Kontakt mit dem Kunststoff-Überzugmaterial und innen in gleitendem Kontakt mit der Welle (6) des Aktuators (1) angeordnet ist.

12. Motorisiertes Ventil nach dem vorhergehenden Anspruch, **dadurch gekennzeichnet, dass** die einzige Dichtung (13) mittels einer an der Welle (6) angefertigten Nut (15) auf der Welle (6) des Aktuators (1) positioniert ist.

13. Motorisiertes Ventil nach einem der vorhergehenden Ansprüche, **dadurch gekennzeichnet, dass** es eine Abdeckung (19) aufweist, die ein Element zur Erfassung der Position des Rotors (5) trägt, das an dem Kunststoff-Überzugsmaterial angefügt und durch Laserschweißen befestigt ist.

14. Motorisiertes Ventil nach dem vorhergehenden Anspruch, **dadurch gekennzeichnet, dass** die Abdeckung (19) eine Anordnung mit elektrischen Anschlüssen zur Stromversorgung des Aktuators (1) und des Erfassungselements enthält.

15. Motorisiertes Ventil nach mindestens einem der vorhergehenden Ansprüche, **dadurch gekennzeichnet, dass** die Führung der Welle (6) nur im Bereich der Statoranordnung (10) erfolgt.

## Claims

1. Motorized valve consisting of a closable pipe (2), a shutter (7), a rotary electromagnetic actuator (1) and a plastics overmolding material, said actuator (1) being formed from a stator assembly (10) and a rotor (5) secured to a shaft (6), the shutter (7) being positioned progressively by said actuator (1) via the shaft (6) and being capable of closing the pipe (2), the plastics overmolding material surrounding and being secured at least in part to the actuator (1) and forming the pipe (2) at least in part, the static sealing being produced by the plastics overmolding material that is common between the actuator (1) and the pipe (2), said overmolding material being passed through by a passage for guiding the shaft (6) connecting the shutter (7) and the rotor (5), the shaft (6) of the actuator carrying the valve (7), **characterized in that** the dynamic sealing of said passage is produced by the use of a single seal (13) in contact with the shaft (6).

2. Motorized valve according to claim 1, **characterized in that** said valve comprises means for returning the shutter into position, produced by a magnetic coupling.

3. Motorized valve according to either claim 1 or claim 2, **characterized in that** the plastics overmolding material forms the pipe (2) entirely.

4. Motorized valve according to either claim 1 or claim 2, **characterized in that** the pipe (2) at least in part comprises a metal base and a part consisting of a plastics molding material.

5. Motorized valve according to the preceding claim, **characterized in that** the stator assembly (10) is fixed to the metal base of the pipe (2) by means of threaded elements (11) promoting the angular indexing of the stator assembly (10) relative to the shaft (6) of the pipe (2).

6. Motorized valve according to the preceding claim, **characterized in that** the shaft (6) of the actuator is positioned relative to the metal pipe (2) by means of a centering nose (14) attached to the pipe (2).

7. Motorized valve according to claim 4, **characterized in that** the stator assembly (10) is fixed to the metal base of the pipe (2) by means of an attached centering nose (14).

8. Motorized valve according to either claim 6 or claim 7, **characterized in that** the attached centering nose (14) and a part of the metal base of the pipe (2) define a housing in which the single seal (13) is placed.

9. Motorized valve according to claim 4, **characterized in that** the shaft (2) of the actuator (1) is positioned relative to the metal pipe (2) by means of a centering nose (14) integral with the metal base of the pipe (2).

10. Motorized valve according to claim 9, **characterized in that** the stator assembly (10) is fixed to the metal base of the pipe (2) by means of the centering nose (14) integral with the metal base of the pipe (2).

11. Motorized valve according to claim 3, claim 9 or claim 10, **characterized in that** the single seal (13) is placed on the shaft (6) of the actuator (1) in static external contact with the plastics overmolding material and in sliding internal contact with the shaft (6) of the actuator (1).

12. Motorized valve according to the preceding claim, **characterized in that** the single seal (13) is positioned on the shaft (6) of the actuator (1) by virtue of a groove (15) produced on the shaft (6).

13. Motorized valve according to any of the preceding claims, **characterized in that** said valve comprises a cover (19) supporting an element for detecting the position of the rotor (5), which element is attached to the plastics overmolding material and fixed by means of laser welding.

14. Motorized valve according to the preceding claim, **characterized in that** the cover (19) has an electrical connection assembly for supplying power to the actuator (1) and the detection element.

15. Motorized valve according to at least one of the preceding claims, **characterized in that** the shaft (6) is guided only at the stator assembly (10).
